# EUROPEAN PATENT APPLICATION

(11) **EP 4 686 193 A1**
(43) Date of publication of application: **28.01.2026**
(21) Application number: 24856586.3
(22) Date of filing: 10.05.2024
(51) Int. Cl.: H04N 9/31, H04N 21/431, H04N 21/485

(54) **ELECTRONIC DEVICE AND CONTROL METHOD THEREFOR**

(30) Priority: 18.08.2023 KR 20230108137
(71) Applicant: Samsung Electronics Co., Ltd., Suwon-si, Gyeonggi-do 16677 (KR)
(72) Inventor: PARK, Jaesung, Suwon-si Gyeonggi-do 16677 (KR)
(74) Representative: Gulde & Partner
(86) International application number: PCT/KR2024/006363
(87) International publication number: WO 2025/041966

(57) **Abstract**

An electronic apparatus includes an image projection unit, a memory configured to store at least one instruction, and one or more processors connected to the image projection unit and the memory to control the electronic apparatus, and the one or more processors are configured to, by executing the at least one instruction, based on an image capturing a projection surface, identify feature information of the projection surface, identify a first format information corresponding to a plurality of images provided in a multi-view mode, obtain layout information of a plurality of screens corresponding to the plurality of images based on the feature information of the projection surface and the first format information, and control the projection unit so that the plurality of images are provided based on the layout information.

## Description

### [Technical Field]

The present disclosure relates to an electronic apparatus and a controlling method thereof, and more particularly, to an electronic apparatus that projects an image and a controlling method thereof.

### [Background Art]

With the development of electronic technology, various types of electronic apparatuses are being developed and popularized. In particular, electronic apparatuses used in various places such as homes, offices, and public spaces have continued to evolve in recent years.

In particular, beam projectors are used in various places such as offices, theaters, homes, and stores, and the corresponding market continues to grow. For home/portable beam projectors, the number of products with various form factors is increasing due to the high efficiency and low power consumption of LED light sources, and the market is growing by more than 10 to 15% every year.

In addition, with the recent increase in wired and wireless interface capabilities between beam projector devices and external devices, it is possible to select and output various contents in real time via Wi-Fi and 5G networks, and to share and control contents between multiple devices. In this context, a multi-view function that outputs various inputs to the screen from a single projector device is necessary to expand the user experience.

### [Detailed Description of the Disclosure]

### [Technical Solution]

An electronic apparatus according to one or more embodiments includes an image projection unit, a memory configured to store at least one instruction, and one or more processors configured to, by executing the at least one instruction, based on an image capturing a projection surface, identify feature information of the projection surface, identify a first format information corresponding to a plurality of images provided in a multi-view mode, obtain layout information of a plurality of screens corresponding to the plurality of images based on the feature information of the projection surface and the first format information, and control the projection unit so that the plurality of images are projected based on the layout information to the projection surface.

According to one or more embodiments, the feature information of the projection surface may include at least one of shape information, structure information, size information, color information, reflectivity information, or obstacle information.

According to one or more embodiments, the first format information corresponding to the plurality of images may include at least one of resolution information or aspect ratio information of the plurality of images.

According to one or more embodiments, the layout information of the plurality of screens may include at least one of resolution information, aspect ratio information, location information, or direction information of the plurality of screens.

According to one or more embodiments, the at least one processors may be configured to, by executing the at least one instruction, perform a keystone correction for the projection surface based on the feature information of the projection surface, identify a plurality of second format information corresponding to the projection surface on which the keystone correction is performed, identify loss information based on the first format information and the plurality of second format information, and obtain layout information of the plurality of screens based on the loss information.

According to one or more embodiments, the one or more processors may be configured to, by executing the at least one instruction, identify loss information corresponding to each of the plurality of second format information based on a similarity between the first format information and the plurality of second format information, and obtain layout information of the plurality of screens based on second format information having a smallest loss information from among the plurality of second format information.

According to one or more embodiments, the one or more processors may be configured to, by executing the at least one instruction, identify loss information corresponding to each of resolution information and aspect ratio information included in the plurality of second format information based on a similarity between the first format information and the plurality of second format information, identify integrated loss information based on the loss information corresponding to each of the resolution information and the aspect ratio information, and identify second format information having a smallest integrated loss information from among the plurality of second format information

According to one or more embodiments, the one or more processors may be configured to, by executing the at least one instruction, identify a plurality of first loss information between first resolution information included in the first format information and a plurality of second resolution information included in the plurality of second format information, identify a plurality of second loss information between first aspect ratio information included in the first format information and a plurality of second aspect ratio information included in the plurality of second format information, identify integrated loss information corresponding to each of the plurality of second format information based on the plurality of first loss information and the plurality of second loss information, and identify second format information having a smallest integrated loss information based on the identified integrated loss information from among the plurality of second format information.

According to one or more embodiments, the one or more processors may be configured to, by executing the at least one instruction, control the image projection unit to project UI information indicating a placement state of the plurality of screens based on the layout information of the plurality of screens, and based on the projected UI information being selected in response to a user command, provide the multi-view mode based on the layout information of the plurality of screens.

According to one or more embodiments, the UI information may include a guide UI for adjusting at least one of size, direction, or angle of the plurality of screens.

According to one or more embodiments, the one or more processors may be configured to, by executing the at least one instruction, based on a location of one of the plurality of images being selected in response to a user command, identify first format information corresponding to remaining images from among the plurality of images, obtain layout information of a screen corresponding to the remaining images based on the feature information of the projection surface and the first format information, and control the image projection unit to provide the remaining images based on the obtained layout information.

According to one or more embodiments, the one or more processors may be configured to, by executing the at least one instruction, identify a number of planes included in the image capturing the projection surface, identify area, direction and proportion of a projection image valid for each of the identified planes, provide a guide UI for a multi-view mode based on the area, direction and proportion of the identified valid projection image, and obtain layout information of a plurality of screens corresponding to the plurality of images based on a projection surface layout selected through the guide UI.

A controlling method of an electronic apparatus according to one or more embodiments include based on an image capturing a projection surface, identifying feature information of the projection surface, identifying a first format information corresponding to a plurality of images provided in a multi-view mode, obtaining layout information of a plurality of screens corresponding to the plurality of images based on the feature information of the projection surface and the first format information, and projecting the plurality of images based on the layout information to the projection surface.

In a non-transitory computer-readable storage medium storing computer instructions that, when executed by a processor of an electronic apparatus according to one or more embodiments, cause the electronic apparatus to perform an operation, the operation includes, based on an image capturing a projection surface, identifying feature information of the projection surface, identifying a first format information corresponding to a plurality of images provided in a multi-view mode, obtaining layout information of a plurality of screens corresponding to the plurality of images based on the feature information of the projection surface and the first format information, and projecting the plurality of images based on the layout information to the projection surface.

### [Brief Description of Drawings]

FIGS. 1A to 1C are views provided to explain a method of providing a multi-view mode according to one or more embodiments;
FIG. 2A is a block diagram illustrating configuration of an electronic apparatus according to an embodiment;
FIG. 2B is a block diagram illustrating configuration of an electronic apparatus in detail according to one or more embodiments;
FIG. 3 is a flowchart provided to explain a controlling method of an electronic apparatus according to one or more embodiments;
FIGS. 4A to 4C are views provided to explain a method of identifying feature information of a projection surface according to one or more embodiments;
FIG. 5 is a flowchart provided to explain a controlling method of an electronic apparatus according to one or more embodiments;
FIG. 6 is a flowchart provided to explain a controlling method of an electronic apparatus according to one or more embodiments;
FIG. 7 is a flowchart provided to explain a controlling method of an electronic apparatus according to one or more embodiments;
FIGS. 8A to 8E are views provided to explain a method of providing a multi-view mode in a projection environment according to one or more embodiments; and
FIG. 9 is a flowchart provided to explain a controlling method of an electronic apparatus according to one or more embodiments.

### [Detailed Description of Embodiments]

Hereinafter, the disclosure is described in detail with reference to the accompanying drawings.

General terms that are currently widely used are selected as the terms used in embodiments of the disclosure in consideration of their functions in the disclosure, and may be changed based on the intention of those skilled in the art or a judicial precedent, the emergence of a new technique, or the like. In addition, in a specific case, terms arbitrarily chosen by an applicant may exist. In this case, the meanings of such terms are mentioned in detail in corresponding descriptions of the disclosure. Therefore, the terms used in the embodiments of the disclosure need to be defined on the basis of the meanings of the terms and the contents throughout the disclosure rather than simple names of the terms.

In the disclosure, expressions "have", "may have", "include", "may include" or the like, indicate the existence of a corresponding feature (for example, a numerical value, a function, an operation or a component such as a part), and does not exclude the existence of an additional feature.

In the disclosure, the expressions "A or B", "at least one of A or/and B", "one or more of A or/and B", "at least one of A or B", "at least one of A and B", "at least one of A, B, and C", or "at least one of A, B, or C", and the like may include any and all combinations of one or more of the items listed together. For example, the expressions "A or B", "at least one of A and B", or "at least one of A or B" may refer to all of the case (1) where at least one A is included, the case (2) where at least one B is included, the case (3) where both of at least one A and at least one B are included. As an additional example, the expressions "at least one of A, B, or C" or "at least one of A, B, and C" may refer to all of the case (1) where at least one A is included, the case (2) where at least one B is included, the case (3) where at least one C is included, the case (4) where both of at least one A and at least one and B are included, the case (5) where both of at least one A and at least one C are included, the case (6) where both of at least one B and at least one C are included, the case (7) where at least of A, at least one B, and at least one C are included.

Expressions "first", "second", and the like, used in the disclosure may indicate various components regardless of the sequence and/or importance of the components. These expressions are used only to distinguish one component from another component, and do not limit the corresponding components.

In case that any component (for example, a first component) is mentioned to be "(operatively or communicatively) coupled with/to" or "connected to" another component (for example, a second component), it is to be understood that any component is directly coupled to another component or may be coupled to another component through still another component (for example, a third component).

An expression "~configured (or set) to" used in the disclosure may be replaced by an expression, for example, "suitable for," "having the capacity to," "~designed to," "~adapted to," "~made to," or "~capable of' depending on a situation. A term "~configured (or set) to" may not necessarily mean "specifically designed to" in hardware.

In some cases, an expression "~an apparatus configured to" may mean that the apparatus "is capable of" together with other apparatuses or components. For example, a "processor configured (or set) to perform A, B, and C" may mean a dedicated processor (for example, an embedded processor) for performing the corresponding operations or a generic-purpose processor (for example, a central processing unit (CPU) or an application processor) that may perform the corresponding operations by executing one or more software programs stored in a memory apparatus.

A term of a singular number may include its plural number unless explicitly indicated otherwise in the context. It is to be understood that a term "include", "formed of", or the like used in the application specifies the presence of features, numerals, steps, operations, components, parts, or combinations thereof, mentioned in the specification, and does not preclude the presence or addition of one or more other features, numerals, steps, operations, components, parts, or combinations thereof.

In the embodiments, a "module" or a "~er/or" may perform at least one function or operation, and be implemented by hardware or software, or be implemented by a combination of hardware and software. In addition, a plurality of "modules" or a plurality of "~ers/ors" may be integrated in at least one module and implemented by at least one processor (not illustrated) except for a "module" or an "~er/or" that needs to be implemented by specific hardware.

Meanwhile, various elements and regions in the drawings are schematically drawn. Therefore, the technical concept of the disclosure is not limited by a relative size or spacing drawn in the accompanying drawings.

Hereinafter, an embodiment of the present disclosure will be described in greater detail with reference to the accompanying drawings.

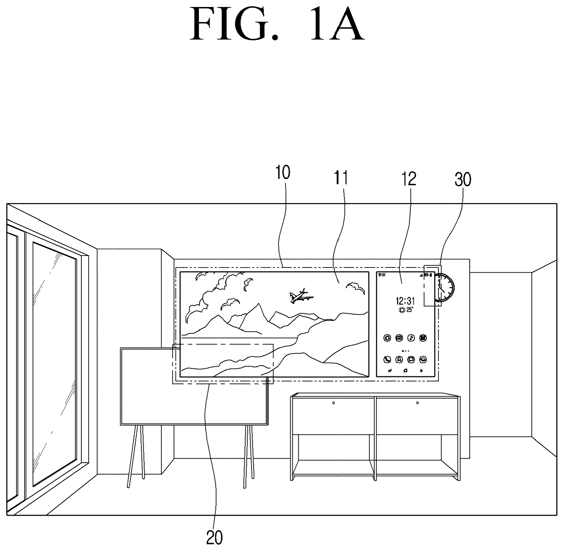

FIGS. 1A to 1C are views provided to explain a method of providing a multi-view mode according to one or more embodiments.

When executing a multi-view function using a projector, a user may execute a multi-view mode (or multi-view function) by selecting a layout of the multi-view and a plurality of input sources desired to be output to the layout using a remote controller. Here, the multi-view mode may be a mode in which a plurality of images received via the plurality of input sources are provided on a plurality of split screens.

In the case of a TV, an input source corresponding to a fixed aspect ratio and size is selected according to the size of the TV screen and the corresponding layout, whereas in the case of a projector, the screen size can vary depending on the projection environment.

For example, as shown in FIG. 1A, there may be cases where obstacles 20 and 30 exist on the projection surface 10 depending on the environment where the projection surface is located.

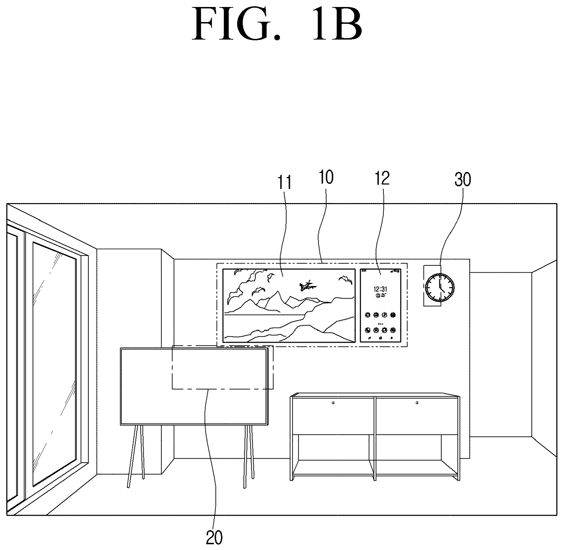

In this case, the problem is that when adjusting the size of the projection surface 10 to avoid obstacles 20, 30, as shown in FIG. 1B, the user may not be able to view the screen at the desired resolution for a plurality of images 11, 12 provided in the multi-view mode.

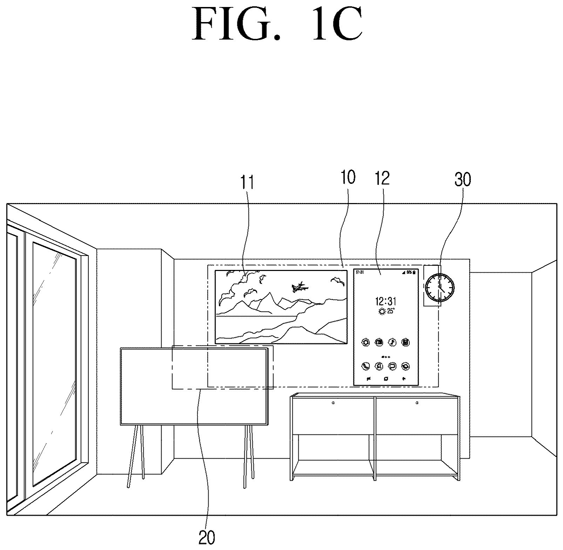

In this case, it may be possible to provide an optimal multi-view mode when providing the plurality of images 11, 12 by considering the location and size of the screen suitable for providing the images in the multi-view mode, taking into account the environment of the projection surface as shown in FIG. 1C.

Accordingly, hereinafter, various embodiments that can enhance the user's UX experience by providing a multi-view layout that is suitable for the projection environment whenever the projection environment varies will be described.

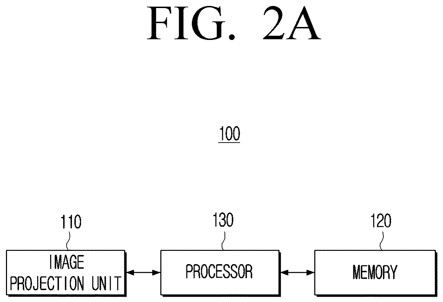

FIG. 2A is a block diagram illustrating configuration of an electronic apparatus according to an embodiment.

Referring to FIG. 2A, the electronic apparatus 100 may include an image projection unit 110, a memory 120, and one or more processors 130. The electronic apparatus 100 may be implemented as a projector that projects an image onto a wall or a projection surface, or any other type of device with image projection capabilities. For example, the electronic apparatus 100 may be implemented as a movable projector that can be moved.

The image projection unit 110 may perform the function of projecting light to the outside to represent an image and outputting the image to a projection surface. Here, the projection surface may be part of the physical space where the image is output or may be a separate projection surface. The image projection unit 110 may include various detailed configurations, such as a light source of at least one of a lamp, LED, or laser, a projection lens, a reflector, etc.

The image projection unit 110 may project an image in one of a variety of projection methods (e.g., a cathode-ray tube (CRT) method, a liquid crystal display (LCD) method, a digital light processing (DLP) method, a laser method, etc.). The image projection unit 110 may include at least one light source.

The image projection unit 110 may output an image in a 4:3 screen ratio, a 5:4 screen ratio, and a 16:9 wide screen ratio depending on the purpose of the electronic apparatus 100 and the user's setting, and may output images in various resolutions such as WVGA (854*480), SVGA (800*600), XGA (1024*768), WXGA (1280*720), WXGA (1280*800), SXGA (1280*1024), UXGA (1600*1200), Full HD (1920*1080), etc. depending on the screen ratio.

In addition, the image projection unit 110 may perform various functions to adjust the projected image under the control of the processor 130. For example, the image projection unit 110 may perform a zoom function, a lens shift function, and the like.

The memory 120 may store information necessary for various embodiments. The memory 120 may be implemented in a memory form embedded in the electronic apparatus 100' or in a memory form detachable from the electronic apparatus 100 according to the data storage purpose. For example, data for driving the electronic apparatus 100 may be stored in the memory embedded in the electronic apparatus 100', and data for the expansion function of the electronic apparatus 100 may be stored in the memory detachable from the electronic apparatus 100. Meanwhile, the memory embedded in the electronic apparatus 100 may be implemented as at least one of a volatile memory (e.g. a dynamic RAM (DRAM), a static RAM (SRAM), or a synchronous dynamic RAM (SDRAM)) and a non-volatile memory (e.g., a one-time programmable ROM (OTPROM), a programmable ROM (PROM), an erasable and programmable ROM (EPROM), an electrically erasable and programmable ROM (EEPROM), a mask ROM, a flash ROM, a flash memory (e.g. a NAND flash or a NOR flash), a hard drive, or a solid state drive (SSD)). In addition, the memory detachable from the electronic apparatus 100' may be implemented in the form of a memory card (e.g., a compact flash (CF), a secure digital (SD), a micro secure digital (Micro-SD), a mini secure digital (Mini-SD), an extreme digital (xD), or a multi-media card (MMC)), an external memory connectable to a USB port (e.g., a USB memory), or the like.

The one or more processors 130 control the overall operations of the electronic apparatus 100. Specifically, the one or more processors 130 may be connected to each configuration of the electronic apparatus 100 to control the overall operations of the electronic apparatus 100. For example, the one or more processors 130 may be electrically connected to the display 110 and the memory 120 to control the overall operations of the electronic apparatus 100. The one or more processors 130 may consist of one or a plurality of processors.

The one or more processors 130 may execute at least one instruction stored in the memory 120 to perform the operations of the electronic apparatus 100 according to various embodiments.

The one or more processors 130 may include one or more of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The one or more processors 130 may control one or any combination of the other components of the electronic apparatus, and may perform communication-related operations or data processing. The one or more processors 130 may execute one or more programs or instructions stored in the memory. For example, the one or more processors may perform a method according to an embodiment by executing one or more instructions stored in the memory.

In a case where the method according to an embodiment of the disclosure includes a plurality of operations, the plurality of operations may be performed by one processor or by a plurality of processors. For example, in a case where a first operation, a second operation, and a third operation are performed by the method according to an embodiment, all of the first operation, the second operation, and the third operation may be performed by a first processor, or the first operation and the second operation may be performed by the first processor (e.g., a general-purpose processor) and the third operation may be performed by a second processor (e.g., an artificial intelligence-dedicated processor).

The one or more processors 130 may be implemented as a single-core processor including one core, or may be implemented as one or more multi-core processors including a plurality of cores (e.g., homogeneous multiple cores or heterogeneous multiple cores). In a case where the one or more processors 130 are implemented as multi-core processors, each of the plurality of cores included in the multi-core processors may include a processor internal memory such as a cache memory or an on-chip memory, and a common cache shared by the plurality of cores may be included in the multi core processors. In addition, each of the plurality of cores (or some of the plurality of cores) included in the multi-core processors may independently read and execute program instructions for implementing the method according to one or more embodiments, or all (or some) of the plurality of cores may be linked to each other to read and execute program instructions for implementing the method according to one or more embodiments.

In a case where the method according to an embodiment includes a plurality of operations, the plurality of operations may be performed by one of the plurality of cores included in the multi-core processors, or may be performed by the plurality of cores. For example, in a case where a first operation, a second operation, and a third operation are performed by the method according to an embodiment, all of the first operation, the second operation, and the third operation may be performed by a first core included in the multi-core processors, or the first operation and the second operation may be performed by the first core included in the multi-core processors, and the third operation may be performed by a second core included in the multi-core processors.

In addition, the electronic apparatus 100 may perform calculation for a function related to the artificial intelligence by using multi-cores (e.g., dual-core or quad-core) included in one processor. In particular, the electronic apparatus 100 may perform the artificial intelligence calculation such as the convolution calculation and the matrix multiplication calculation in parallel using the multi-cores included in the processor.

In embodiments of the disclosure, the processor may refer to a system on a chip (SoC) in which one or more processors and other electronic components are integrated, a single-core processor, multi-core processors, or a core included in the single-core processor or the multi-core processors. Here, the core may be implemented as CPU, GPU, APU, MIC, DSP, NPU, hardware accelerator, machine learning accelerator, or the like, but the embodiments of the disclosure are not limited thereto. Hereinafter, one or more processors 130 will be referred to as the processor 130 for convenience of explanation.

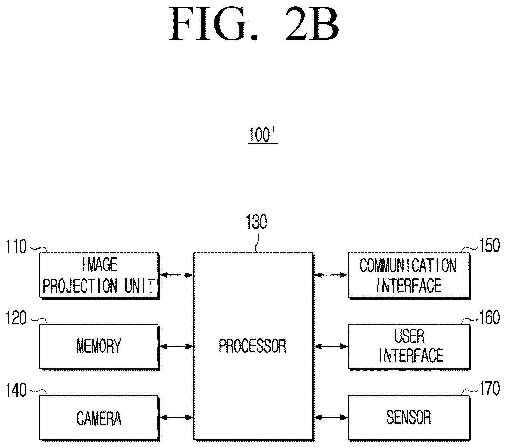

FIG. 2B is a block diagram illustrating configuration of an electronic apparatus in detail according to one or more embodiments.

Referring to FIG. 2B, an electronic apparatus 100' may include the image projection unit 110, the memory 120, the one or more processors 130, a camera 140, a communication interface 150, a user interface 160, and a sensor 170. Any of the configurations shown in FIG. 2B that are redundant of the configurations shown in FIG. 2A will not be described in detail.

The camera 140 may be turned on in response to a preset event to perform shooting. The camera 140 may convert the captured image into an electrical signal and generate image data based on the converted signal. For example, a subject may be converted to an electrical image signal via a semiconductor optical device (CCD), and the converted image signal may be amplified, converted to a digital signal, and then signal-processed. For example, the camera 140 may include at least one of a general (or basic) camera or an ultra-wide-angle camera.

The communication interface 150 may also be implemented as various interfaces according to the exemplary embodiment of the electronic apparatus 100'. For example, the communication interface 150 may perform communication with an external device, an external storage medium (e.g., a USB memory), an external server (e.g., a web hard drive), etc. through communication methods such as Bluetooth, AP-based Wi-Fi (Wireless LAN Network), Zigbee, wired/wireless Local Area Network (LAN), Wide Area Network (WAN), Ethernet, IEEE 1394, High-Definition Multimedia Interface (HDMI), Universal Serial Bus (USB), Mobile High-Definition Link (MHL), Audio Engineering Society/ European Broadcasting Union (AES/EBU), Optical, Coaxial, etc. According to an embodiment, the communication interface 150 may perform communication with other electronic apparatuses, external servers and/or remote control devices, etc.

The user interface 160 may be implemented as a device such as a touch pad, a mouse, and a keyboard, or may be implemented as a touch screen capable of performing the above-described display function and manipulation input function.

The sensor 170 may include various types of sensors, such as touch sensor, proximity sensor, acceleration sensor (or gravity sensor), geomagnetic sensor, gyro sensor, pressure sensor, position sensor, distance sensor, illuminance sensor, etc. The distance sensor is configured to detect the distance from the projection surface. The distance sensor may be implemented as various types of sensors such as ultrasonic sensor, infrared sensor, LIDAR sensor, RADAR sensor, and photodiode sensors, etc. The geomagnetic sensor or gyro sensor may be used to obtain yaw information.

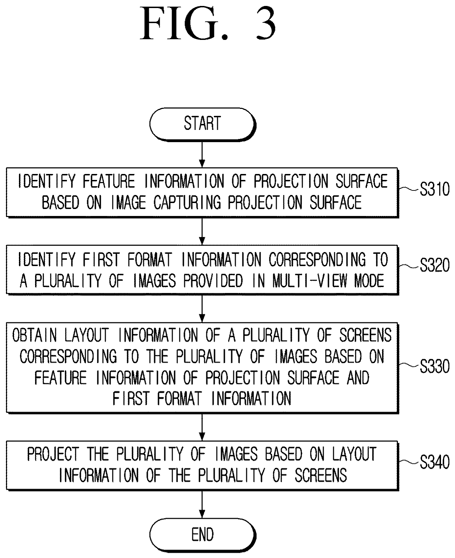

FIG. 3 is a flowchart provided to explain a controlling method of an electronic apparatus according to one or more embodiments.

According to the embodiment illustrated in FIG. 3, the processor 130 may identify feature information of the projection surface based on the image capturing the projection surface (S310). For example, the feature information of the projection surface may include at least one of shape information, structure information, size information, color information, reflectivity information, or obstacle information of the projection surface.

For example, the processor 130 may obtain feature information of the projection surface by using a predetermined analysis method, such as edge analysis, texture analysis, color analysis, and the like. For example, the processor 130 may identify obstacle information included in the captured image using at least one of object recognition, object detection, object tracking, or image segmentation. For example, the processor 130 may identify obstacle information using technologies such as semantic segmentation, which classifies and extracts objects included in the image by type as needed, instance segmentation, which recognizes objects by classifying objects of the same type, and rectangular bounding box including detected objects when detecting objects included in the image.

For example, the processor 130 may obtain feature information of the projection surface by inputting the captured image to a trained first neural network model. For example, when the captured image is input, the first neural network model may be trained to output at least one of shape information, structure information, size information, color information, reflectivity information, or obstacle information of the projection surface.

The processor 130 may identify first format information corresponding to a plurality of images provided in a multi-view mode (S320). Here, the multi-view mode may be a mode in which a plurality of images received via a plurality of input sources are provided on a plurality of split screens. For example, the first format information corresponding to the plurality of images may include at least one of resolution information or aspect ratio information for each of the plurality of images. For example, the processor 130 may obtain resolution information and aspect ratio information of each of the plurality of images based on at least one of features of each of the plurality of input sources available in the multi-view mode or at least one of features of the images provided via each of the plurality of input sources.

The processor 130 may obtain layout information of the plurality of screens corresponding to the plurality of images based on the feature information of the projection surface and the first format information (S330).

For example, the layout information of the plurality of screens may include at least one of resolution information, aspect ratio information, location information, or direction information of the plurality of screens. For example, the processor 130 may obtain the layout information of the plurality of screens suitable for the first format information based on the feature information of the projection surface.

For example, the processor 130 may obtain layout information of the plurality of screens by inputting the feature information of the projection surface and the first format information to a trained second neural network model. For example, when the feature information of the projection surface and the first format information is input, the second neural network model may be trained to output at least one of resolution information, aspect ratio information, location information, or direction information of the plurality of screens.

For example, the processor 130 may obtain feature information of the projection surface by inputting the captured image and the first format information to a trained third neural network model. For example, when the captured image and the first format information are input, the second neural network model may be trained to output at least one of resolution information, aspect ratio information, location information, or direction information of the plurality of screens.

The processor 130 may control the image projection unit 110 to provide a plurality of images based on layout information of the plurality of screens (S340). For example, the processor 130 may control the image projection unit 110 to provide a plurality of images based on resolution information and aspect ratio information of the plurality of screens.

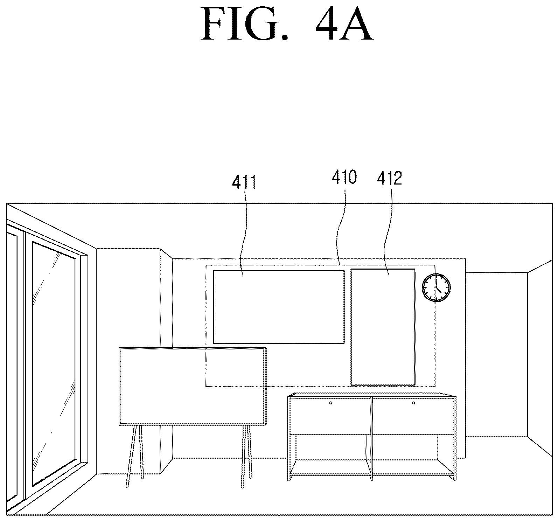

FIGS. 4A to 4C are views provided to explain a method of identifying feature information of a projection surface according to one or more embodiments.

According to one or more embodiments, the processor 130 may identify at least one of shape information, structure information, size information, color information, reflectivity information, or obstacle information of the projection surface, and calculate a number of areas available on the projection surface based on the identified information. For example, the processor 130 may identify a plurality of areas (or split surfaces) that can be provided on the projection surface based on the features of the projection surface. For example, the processor 140 may identify the projection surface into a plurality of areas through recognition of straight structures within the projection surface, color recognition, recognition of differences in reflectivity, and the like.

For example, when a planar projection surface is recognized, as shown in FIG. 4A, a plurality of areas 411, 412 that can be provided based on at least one of the location or size of obstacles included in a projection surface 410 may be identified.

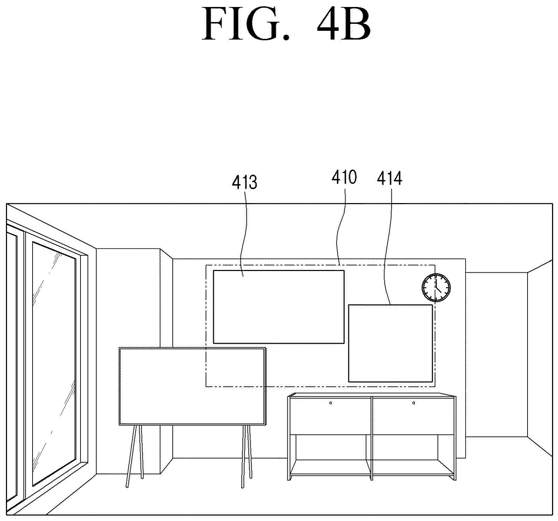

For example, when a planar projection surface is recognized, as shown in FIG. 4B, a plurality of areas 413, 414 that can be provided based on at least one of the location or size of obstacles included in the projection surface 410 may be identified.

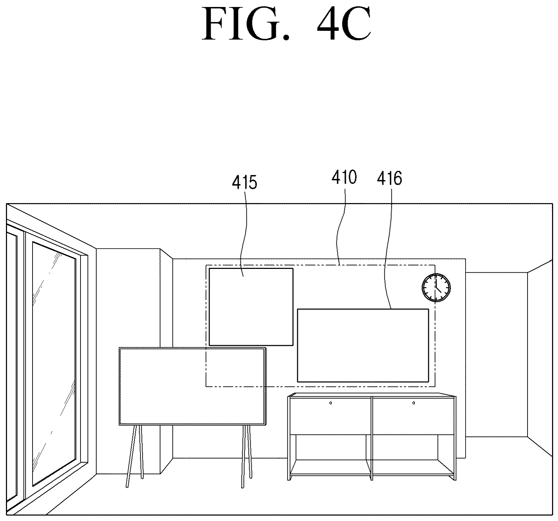

For example, when a planar projection surface is recognized, as shown in FIG. 4C, a plurality of areas 415, 416 that can be provided based on at least one of the location or size of obstacles included in the projection surface 410 may be identified.

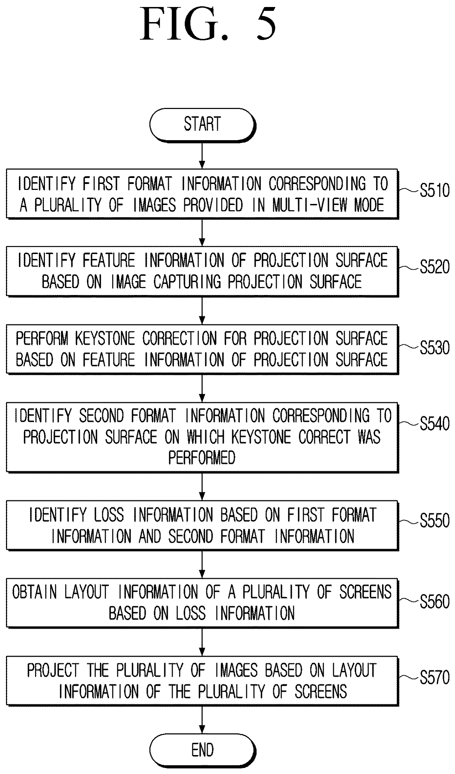

FIG. 5 is a flowchart provided to explain a controlling method of an electronic apparatus according to one or more embodiments.

According to the embodiment illustrated in FIG. 5, the processor 130 may identify first format information corresponding to the plurality of images provided in the multi-view mode (S510). For example, the first format information corresponding to the plurality of images may include at least one of resolution information or aspect ratio information for each of the plurality of images. For example, the processor 130 may obtain the resolution information and aspect ratio information of each of the plurality of images based on features of each of the plurality of input sources available in the multi-view mode.

The processor 130 may identify feature information of the projection surface based on the image capturing the projection surface (S520). For example, the feature information of the projection surface may include at least one of shape information, structure information, size information, color information, reflectivity information, or obstacle information of the projection surface.

The processor 130 may perform a keystone correction for the projection surface based on feature information of the projection surface (S530). For example, the electronic apparatus 100 having the capability to project an image, i.e., a projector function, may display a screen with relatively accurate proportions when the projector is located in a straight line with the projection surface, but may project a screen that is deviated from the projection surface, or may project a diamond-shaped screen that is distorted up, down, left, right, or left when the above condition is not satisfied due to space limitations. In this case, a keystone correction may be required. The keystone correction refers to an adjustment function by projecting the screen as if forcibly moving the corners of the displayed screen, i.e., the projected screen, to be closer to the original shape of a square. Various conventional methods may be used as keystone correction methods, so detailed explanations thereof will be omitted.

The processor 130 may identify second format information corresponding to the projection surface on which the keystone correction was performed (S540). For example, the second format information corresponding to the plurality of images may include at least one of resolution information or aspect ratio information for each of the split surfaces included in the projection surface on which the keystone correction was performed. For example, the second format information may include resolution information and aspect ratio information for a projection valid area after keystone correction. Here, the projection valid area may mean the area that can be projected by avoiding obstacles in the projection surface.

For example, the processor 130 may identify resolution information and aspect ratio information for each of the split screens included in each projection surface based on the available screen configurations of the projection surfaces as shown in FIGS. 4A to 4C.

The processor 130 may identify loss information based on the first format information and the second format information (S550). For example, the first format information corresponding to the plurality of images may include at least one of resolution information or aspect ratio information for each of the plurality of images.

The processor 130 may obtain layout information of the plurality of screens based on the loss information (S560). For example, the layout information of the plurality of screens may include at least one of resolution information, aspect ratio information, location information, or direction information of the plurality of screens.

According to an embodiment, the processor 130 may identify loss information (or difference information) corresponding to each of the plurality of second format information based on a similarity between the first format information and the plurality of second format information. Here, the loss information may be information based on the magnitude (or amount) of the difference between each of the plurality of second format information relative to the first format information. For example, the processor 130 may obtain layout information of the plurality of screens based on the second format information having the smallest loss information from among the plurality of second format information.

For example, the processor 130 may identify loss information corresponding to each of the resolution information and the aspect ratio information included in the plurality of second format information based on a similarity between the first format information and the plurality of second format information. The processor 130 may identify integrated loss information based on the loss information corresponding to each of the resolution information and the aspect ratio information, and identify the second format information having the smallest integrated loss information from among the plurality of second format information.

For example, the processor 130 may identify resolution loss information based on a similarity between first resolution information included in the first format information and second resolution information included in each of the plurality of second format information. For example, the resolution loss information may be calculated as Resolution Loss = (Loss1 + Loss2 + ... + LossN). Here, Loss1 (resolution) = input source #1 resolution - resolution that can be displayed in split area #1, Loss2 (resolution) = input source #2 resolution - resolution that can be displayed in split area #2, and LossN (resolution) = input source #N resolution - resolution that can be displayed in split area #N.

For example, the processor 130 may identify aspect ratio loss information based on a similarity between first aspect ratio information included in the first format information and second aspect ratio information included in each of the plurality of second format information. For example, the aspect ratio loss information may be calculated as R Aspect Ratio Loss = (Lossl + Loss2 + ... + LossN). Here, Loss1 (aspect ratio) = (H,V) ratio of input source #1/(H,V) ratio of split area #1, Loss2 (aspect ratio) = (H,V) ratio of input source #2/(H,V) ratio of split area #2, and LossN (aspect ratio) = (H,V) ratio of input source #N/(H,V) ratio of split area #N.

For example, the processor 130 may identify integrated loss information based on the resolution loss information and the aspect ratio loss information, and identify the second format information having the smallest integrated loss information from among the plurality of second format information. For example, the processor 130 may identify second format information that can express information of the input image source with the least loss.

For example, the integrated loss information may be calculated as arg min(a*Resolution Loss + b*Aspect Ratio Loss) (where a = 1 - b).

The processor 130 may project a plurality of images based on the layout information of the plurality of screens (S570).

According to an embodiment, the processor 130 may control the image projection unit 110 to project UI information indicating the placement state of the plurality of screens based on the layout information of the plurality of screens. Subsequently, when the projected UI information is selected in response to a user command, the processor 130 may provide a multi-view mode based on the layout information of the plurality of screens. Here, the UI information may include a guide UI for adjusting at least one of size, direction, or angle of the plurality of screens.

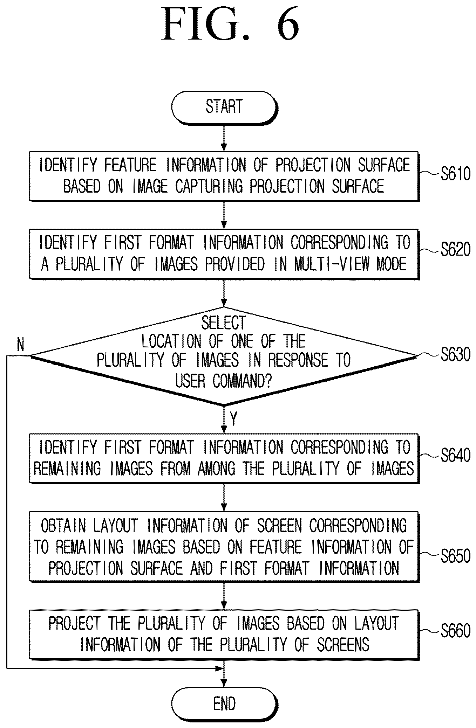

FIG. 6 is a flowchart provided to explain a controlling method of an electronic apparatus according to one or more embodiments.

According to the embodiment illustrated in FIG. 6, the processor 130 may identify feature information of the projection surface based on the image capturing the projection surface (S310). For example, the feature information of the projection surface may include at least one of shape information, structure information, size information, color information, reflectivity information, or obstacle information of the projection surface.

The processor 130 may identify first format information corresponding to the plurality of images provided in the multi view mode. For example, the first format information corresponding to the plurality of images may include at least one of resolution information or aspect ratio information for each of the plurality of images.

When a location of one of the plurality of images is selected (S630:Y) in response to a user command, the processor 130 may identify first format information corresponding to the remaining images of the plurality of images (S640). For example, the processor 130 may identify at least one of resolution information, aspect ratio information, location information, or direction information corresponding to the remaining images.

The processor 130 may obtain layout information of the screen corresponding to the remaining images based on the feature information of the projection surface and the first format information (S650). For example, when a resolution and aspect ratio of one of the plurality of images is selected in response to a user command, the processor 130 may fix a projection area of the corresponding image and obtain layout information of the screen corresponding to the remaining images based on the size of the remaining area of the projection surface and the resolution and aspect ratio of the remaining images of the plurality of images.

The processor 130 may control the image projection unit 110 such that the image selected by the user is provided in the selected area and the remaining images are provided based on the layout information of the plurality of screens (S660).

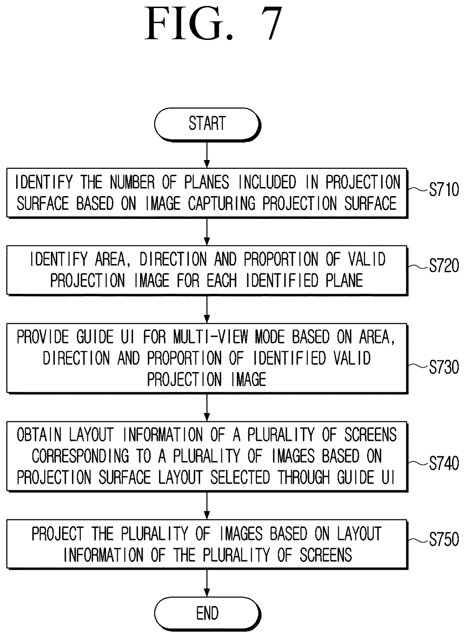

FIG. 7 is a flowchart provided to explain a controlling method of an electronic apparatus according to one or more embodiments.

According to the embodiment illustrated in FIG. 7, the processor 130 may identify the number of planes included in the projection surface based on the image capturing the projection surface (S710). For example, the processor 130 may identify the number of planes through corner detection in the image capturing the projection surface.

The processor 130 may identify the area, direction, and aspect ratio (or proportion) of the valid projected image for each identified plane (S720).

The processor 130 may provide a guided UI for the multi-view mode based on the area, direction, and aspect ratio (or proportion) of the identified valid projected image (S730). For example, the processor 130 may provide a guided UI in the form of a thumbnail, which allows the user to recognize at a glance the placement state of the plurality of screens available in the multi-view mode.

The processor 130 may obtain layout information of the plurality of screens corresponding to the plurality of images based on the projection surface layout selected via the guide UI (S740).

The processor 130 may project the plurality of images based on the layout information of the plurality of screens (S750).

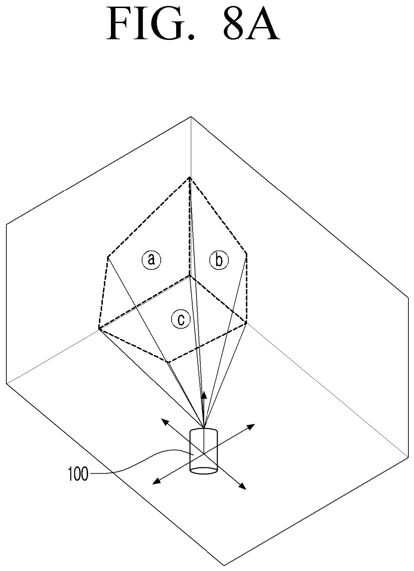

FIGS. 8A to 8E are views provided to explain a method of providing a multi-view mode in a projection environment according to one or more embodiments.

Referring to FIG. 8A, the processor 130 may identify the number of planes in the image capturing the projection surface through corner detection.

For example, as shown in FIG. 8A, if the number of corner coordinates is recognized as four, it can be identified as a one-sided projection. In addition, if the number of corner coordinates is recognized as six, it can be identified as a two-sided projection. Further, if the number of corner coordinates is recognized as seven, it can be identified as a three-sided projection.

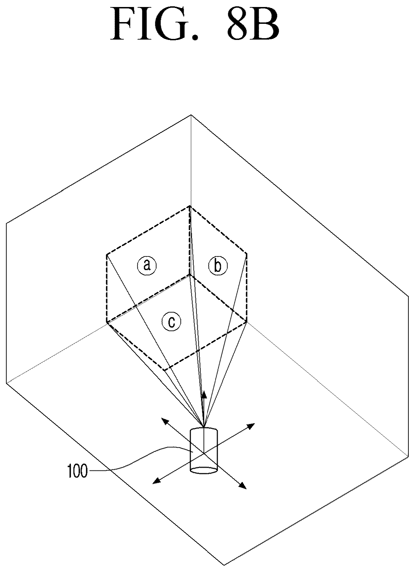

Referring to FIG. 8B, the processor 130 may estimate the projection area, projection direction, and aspect ratio (or proportion) of a valid image on an individual surface basis by performing a Geometry Calibration.

For example, as shown in FIG. 8B, the ratio of surface ⓐ may be estimated as front/left/400x300/approximately 4:3, the ratio of surface ⓑ may be estimated as front/right/300x300/approximately 1:1, and the ratio of surface ⓒ may be estimated as bottom/center/400x300/approximately 4:3.

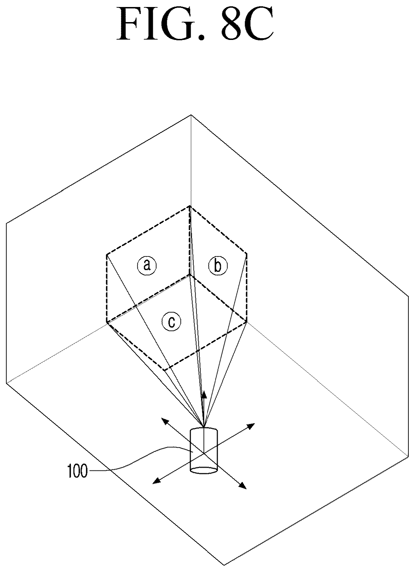

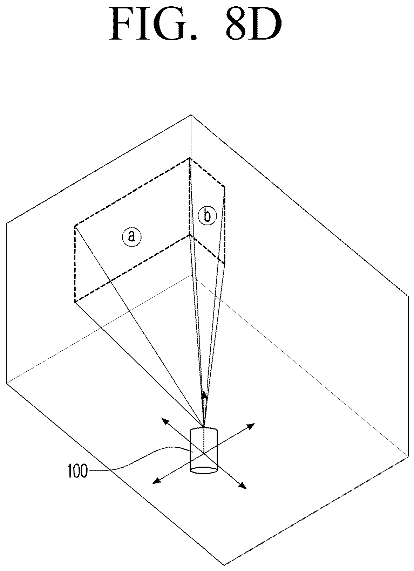

Referring to FIGS. 8C and 8D, the processor 130 may provide the user with information about the multi-view configurations available in the projection surface, and may allow the user to select a multi-view configuration. For example, as shown in FIGS. 8C and 8D, the processor 130 may provide a guide on the projection surface to allow the user to select three surfaces (ⓐ, ⓑ, ⓒ) or two surfaces (a-b, a-c or b-c).

For example, if the user selects fewer surfaces than the number of detected valid surfaces, the processor 130 may process the unselected surfaces differently from the other surfaces. For example, the processor 130 may process the unselected surfaces with a particular color, e.g., black (or a similar color). For example, if the user does not want the bottom surface to be available as a projection surface, the processor 130 may process the bottom surface with black so that only surface ⓐ and surface ⓑ are available as projection surfaces.

For example, the processor 130 may provide an adjustment guide for adjusting the projection surface to reduce the number of valid projection surfaces and increase valid areas. For example, the adjustment guide in the shape of an arrow may be provided.

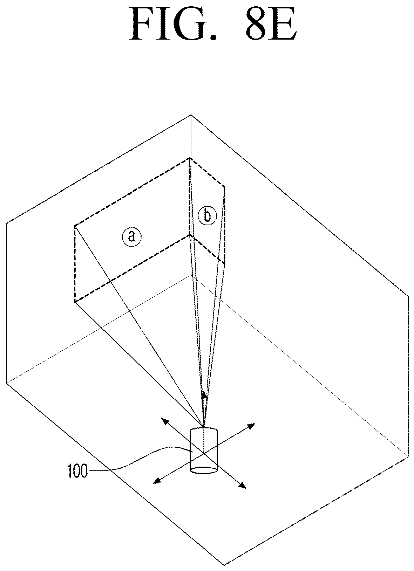

Referring to FIG. 8E, upon entering the multi-view mode based on a preset event, the processor 130 may automatically select a plurality of image sources to be provided to the plurality of surfaces selected by the user, or may automatically recommend a multi-view screen configuration based on information regarding the plurality of image sources selected by the user. For example, a preset event may include an event in which a multi-view mode is selected or an event in which a plurality of image sources are selected.

For example, as shown in FIG. 8E, the processor 130 may automatically select image sources to be displayed on two surfaces (surfaces ⓐ, ⓑ), or may automatically recommend a multi-view screen configuration as shown in FIG. 8E based on information regarding the two image sources selected by the user. For example, the processor 130 may preferentially place the input source with the highest resolution from among the input sources or most suitable for the 16:9 ratio on surface ⓐ, and may preferentially place the input source most suitable for the 9:16 ratio from among the input sources (e.g., smartphone mirroring) on surface ⓑ. In this case, the processor 130 may calculate loss information based on the combination. For example, loss function may be calculated as Loss = Σ (recommended placement image specification - input source specification). For example, resolution loss may be calculated as Resolution Loss = Σ (input resolution - resolution capable of being output by the projector), and ratio loss may be calculated as Ratio Loss = Σ (input source ratio / ratio capable of being output by the projector).

According to an embodiment, when there is no input source for a particular screen ratio, for example, when there is only an input source for the image ratio of 4:3 or 16:9, a UI to guide projector screen adjustment may be provided. For example, the UI may include a UI for adjusting the display direction and/or display angle.

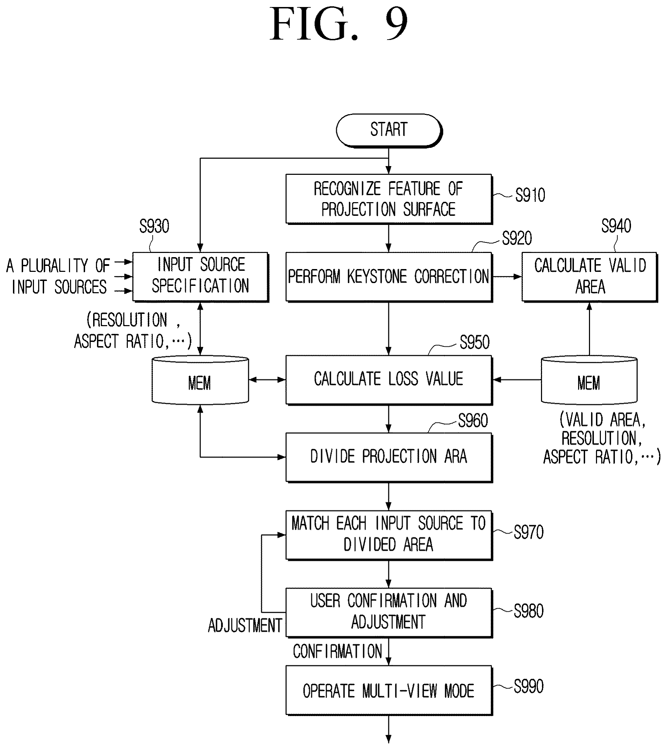

FIG. 9 is a flowchart provided to explain a controlling method of an electronic apparatus according to one or more embodiments.

According to the embodiment shown in FIG. 9, when the feature of the projection surface is recognized (S910), the processor 130 may perform a keystone correction for the projection screen based on the recognized feature information (S920).

For example, the processor 130 may extract factors that allow a single plane to be perceived as a plurality of planes by human visual characteristics. For example, the processor 130 may calculate a plurality of split surfaces by considering the feature of the projection surface in the projector and factors that the human eye may recognize as separate split surfaces according to the feature. According to the characteristics of human vision, one or more of corners, some linear shapes/structures, colors, and reflectivity difference may be detected within the projection surface when outputting a single screen of content. This may cause visibility distortions that interfere with the perception of a single screen. These characteristics can be utilized as cues to activate a multi-view function that organizes a plurality of input image sources into a plurality of planes, even though they are projected onto a single plane.

For example, the processor 130 may perform a distortion correction operation, such as a keystone correction, to output a screen in a rectangular or square shape on a plurality of planes. Once the keystone correction is complete, the projection surface on which the keystone correction was performed may be divided into a plurality of planar areas.

The processor 130 may identify specification information of the plurality of input sources. For example, the processor may identify the resolution and aspect ratio of the plurality of input sources, and store the identified information in the memory 120 (S930).

The processor 130 may identify valid area information that can be output to the projection surface after the keystone correction and store the identified information in the memory 120 (S940).

The processor 130 may calculate loss information based on the specification information of the plurality of input sources stored in the memory 120 and the valid area information outputtable to the projection surface (S950). For example, the processor 130 may identify the loss information between the specification information of the plurality of input sources (e.g., first format information) and the plurality of valid area information (e.g., second format information as shown in FIGS. 4A through 4C).

Based on the calculated loss information, the processor 130 may divide the projection surface area into areas (S960) and match each input source to the divided areas (S970). For example, when the divided area with minimal loss is identified, the processor 130 may match each input source to the corresponding divided area.

When each input source provides a UI matched to the divided areas and user confirmation and/or adjustment via the UI is performed (S980), the processor 130 may perform a multi-view operation (S990). For example, when the location of a specific image is changed to a specific divided area by the user, the processor 130 may re-identify a layout that minimizes loss while holding the corresponding image in the corresponding divided area and provide it to the user for confirmation.

According to an embodiment, the processor 130 may provide a UI that recommends a multi-view layout with minimal loss and source placement to display on each surface. For example, the processor 130 may provide source placement for each surface in the form of a thumbnail, and when a provided thumbnail is selected by the user, may provide a multi-view mode based on the corresponding source placement.

According to an embodiment, when a user command to reposition an image source is received, the processor 130 may guide viewing constraint information such as screen size, color, etc. based on the repositioning, and provide a multi-view mode based on the repositioning once the repositioning is confirmed by the user.

According to the various embodiments described above, when providing a multi-view mode using a projector, the multi-view mode may be provided in a layout suitable for the viewing space, thereby improving user convenience. In addition, the UX experience may be improved not only in a home environment but also in a business to business environment such as a cafe interior.

Meanwhile, the methods according to the above-described various embodiments may be implemented only by software upgrade or hardware upgrade of the existing electronic apparatus.

Alternatively, the above-described various embodiments may be performed through an embedded server included in the electronic apparatus, or an external server of the electronic apparatus.

Meanwhile, according to an embodiment, the above-described various embodiments may be implemented in software including an instruction stored in a machine-readable storage medium that can be read by a machine (e.g., a computer). A machine may be a device that invokes the stored instruction from the storage medium and be operated based on the invoked instruction, and may include a display device (e.g., display apparatus (A)) according to embodiments. In case that the instruction is executed by the processor, the processor may directly perform a function corresponding to the instruction or other components may perform the function corresponding to the instruction under the control of the processor. The instruction may include codes generated or executed by a compiler or an interpreter. The machine-readable storage medium may be provided in the form of a non-transitory storage medium. Here, the term "non-transitory" indicates that the storage medium is tangible without including a signal, and does not distinguish whether data are semi-permanently or temporarily stored in the storage medium.

Further, according to one embodiment of the present disclosure, methods according to various embodiments described above may be provided in a computer program product. The computer program product is a commodity and may be traded between a seller and a buyer. The computer program product may be distributed in the form of a device-readable storage medium (e.g., compact disc read only memory (CD-ROM)) or online through an application store (e.g., PlayStore^{™}). In the case of online distribution, at least a portion of the computer program product may be stored, or at least temporarily generated, in a storage medium, such as a manufacturer's server, an application store's server, or the memory of a relay server.

Further, each of the components (e.g., modules or programs) according to the various embodiments described above may comprise a singular or plural number of objects, and some of the corresponding subcomponents described above may be omitted, or other subcomponents may be further included in the various embodiments. Alternatively or additionally, some components (e.g., modules or programs) may be integrated into a single object that performs the same or similar functions as were performed by each of the respective components prior to the integration. In accordance with various embodiments, the operations performed by a module, program, or other component may be executed sequentially, in parallel, iteratively, or heuristically, or at least some of the operations may be executed in a different order, omitted, or other operations may be added.

Although preferred embodiments of the present disclosure have been shown and described above, the disclosure is not limited to the specific embodiments described above, and various modifications may be made by one of ordinary skill in the art without departing from the spirit of the disclosure as claimed in the claims, and such modifications are not to be understood in isolation from the technical concept or prospect of the present disclosure.

## Claims

1. An electronic apparatus comprising:
an image projection unit;
a memory configured to store at least one instruction; and
one or more processors configured to, by executing the at least one instruction:
based on an image capturing a projection surface, identify feature information of the projection surface,
identify a first format information corresponding to a plurality of images provided in a multi-view mode,
obtain layout information of a plurality of screens corresponding to the plurality of images based on the feature information of the projection surface and the first format information, and
control the image projection unit so that the plurality of images are projected based on the layout information to the projection surface.

2. The electronic apparatus as claimed in claim 1, wherein
the feature information of the projection surface includes at least one of shape information, structure information, size information, color information, reflectivity information, or obstacle information,
the first format information corresponding to the plurality of images includes at least one of resolution information or aspect ratio information of the plurality of images, and
the layout information of the plurality of screens includes at least one of resolution information, aspect ratio information, location information, or direction information of the plurality of screens.

3. The electronic apparatus as claimed in claim 1, wherein the one or more processors are configured to, by executing the at least one instruction:
perform a keystone correction for the projection surface based on the feature information of the projection surface,
identify a plurality of second format information corresponding to the projection surface on which the keystone correction is performed,
identify loss information based on the first format information and the plurality of second format information, and
obtain layout information of the plurality of screens based on the loss information.

4. The electronic apparatus as claimed in claim 3, wherein the one or more processors are configured to, by executing the at least one instruction:
identify loss information corresponding to each of the plurality of second format information based on a similarity between the first format information and the plurality of second format information, and
obtain layout information of the plurality of screens based on second format information having a smallest loss information from among the plurality of second format information.

5. The electronic apparatus as claimed in claim 3, wherein the one or more processors are configured to, by executing the at least one instruction:
identify loss information corresponding to each of resolution information and aspect ratio information included in the plurality of second format information based on a similarity between the first format information and the plurality of second format information,
identify integrated loss information based on the loss information corresponding to each of the resolution information and the aspect ratio information, and
identify second format information having a smallest integrated loss information from among the plurality of second format information.

6. The electronic apparatus as claimed in claim 3, wherein the one or more processors are configured to, by executing the at least one instruction:
identify a plurality of first loss information between first resolution information included in the first format information and a plurality of second resolution information included in the plurality of second format information,
identify a plurality of second loss information between first aspect ratio information included in the first format information and a plurality of second aspect ratio information included in the plurality of second format information,
identify integrated loss information corresponding to each of the plurality of second format information based on the plurality of first loss information and the plurality of second loss information, and
identify second format information having a smallest integrated loss information based on the identified integrated loss information from among the plurality of second format information.

7. The electronic apparatus as claimed in claim 1, wherein the one or more processors are configured to, by executing the at least one instruction:
control the image projection unit to project UI information indicating a placement state of the plurality of screens based on the layout information of the plurality of screens, and
based on the projected UI information being selected in response to a user command, provide the multi-view mode based on the layout information of the plurality of screens.

8. The electronic apparatus as claimed in claim 7, wherein the UI information includes a guide UI for adjusting at least one of size, direction, or angle of the plurality of screens.

9. The electronic apparatus as claimed in claim 1, wherein the one or more processors are configured to, by executing the at least one instruction:
based on a location of one of the plurality of images being selected in response to a user command, identify first format information corresponding to remaining images from among the plurality of images,
obtain layout information of a screen corresponding to the remaining images based on the feature information of the projection surface and the first format information, and
control the image projection unit to provide the remaining images based on the obtained layout information.

10. The electronic apparatus as claimed in claim 1, wherein the one or more processors are configured to, by executing the at least one instruction:
identify a number of planes included in the image capturing the projection surface,
identify area, direction and proportion of a projection image valid for each of the identified planes,
provide a guide UI for a multi-view mode based on the area, direction and proportion of the identified valid projection image, and
obtain layout information of a plurality of screens corresponding to the plurality of images based on a projection surface layout selected through the guide UI.

11. A controlling method of an electronic apparatus, comprising:
based on an image capturing a projection surface, identifying feature information of the projection surface;
identifying a first format information corresponding to a plurality of images provided in a multi-view mode;
obtaining layout information of a plurality of screens corresponding to the plurality of images based on the feature information of the projection surface and the first format information; and
projecting the plurality of images based on the layout information to the projection surface.

12. The controlling method as claimed in claim 11, wherein
the feature information of the projection surface includes at least one of shape information, structure information, size information, color information, reflectivity information, or obstacle information,
the first format information corresponding to the plurality of images includes at least one of resolution information or aspect ratio information of the plurality of images, and
the layout information of the plurality of screens includes at least one of resolution information, aspect ratio information, location information, or direction information of the plurality of screens.

13. The controlling method as claimed in claim 11, wherein the obtaining layout information of a plurality of screens comprises:
performing a keystone correction for the projection surface based on the feature information of the projection surface,
identifying a plurality of second format information corresponding to the projection surface on which the keystone correction is performed,
identifying loss information based on the first format information and the plurality of second format information, and
obtaining layout information of the plurality of screens based on the loss information.

14. The controlling method as claimed in claim 13, wherein
the identifying loss information comprises identifying loss information corresponding to each of the plurality of second format information based on a similarity between the first format information and the plurality of second format information, and
the obtaining layout information of the plurality of screens comprises obtaining layout information of the plurality of screens based on second format information having a smallest loss information from among the plurality of second format information.

15. A non-transitory computer-readable storage medium storing computer instructions that, when executed by a processor of an electronic apparatus, cause the electronic apparatus to perform an operation, the operation comprising:
based on an image capturing a projection surface, identifying feature information of the projection surface;
identifying a first format information corresponding to a plurality of images provided in a multi-view mode;
obtaining layout information of a plurality of screens corresponding to the plurality of images based on the feature information of the projection surface and the first format information; and
projecting the plurality of images based on the layout information to the projection surface.
